# EUROPÄISCHE PATENTSCHRIFT

(11) **EP 1 275 302 B1**
(45) Veröffentlichungstag und Bekanntmachung des Hinweises auf die Patenterteilung: **08.08.2007**
(21) Anmeldenummer: 02405535.2
(22) Anmeldetag: 25.06.2002
(51) Int. Cl.: A21B 3/04

(54) **Backofen**
Baking oven
Four de cuisson

(30) Priorität: 25.06.2001 CH 20011152; 04.07.2001 EP 01810655
(43) Veröffentlichungstag der Anmeldung: 15.01.2003
(73) Patentinhaber: BASAG Service- und Handelsgesellschaft GmbH, 3534 Signau / BE (CH)
(72) Erfinder: Bürer, Urs Bernhard, 3032 Hinterkappelen (CH)

(56) Entgegenhaltungen:
- EP-A- 1 102 010
- EP-B- 0 302 067
- DE-A- 1 814 893
- DE-A- 2 644 839
- DE-U- 9 205 098
- FR-A- 2 685 607

## Beschreibung

Die vorliegende Erfindung bezieht sich auf einen Backofen gemäss Oberbegriff des Anspruchs 1, insbesondere für professionelle Anwendung.

Backöfen für professionelle Anwendung sind in verschiedenen Varianten bekannt. Eine wichtige zeichnet sich dadurch aus, dass die Wärme von der Feuerung nicht direkt auf die Backkammer übertragen wird, sondern indirekt über die von der Feuerung abgegebenen heissen Gase, seien es heisse Abgase oder z. B. von der Feuerung erhitzte Luft. Zum Beispiel können bei Backöfen mit Holzfeuerung einfacherweise die entstehenden Abgase (das Rauchgas) in entsprechenden Kanälen an den Wänden der Backkammern entlanggeführt werden.

Weiter weisen Backöfen noch eine Einrichtung zum Einleiten von Dampf auf, insbesondere für das Backen von Brot. Für die Dampferzeugung können einmal Heizschlangen direkt in der Feuerung verlegt werden, wodurch die in der Feuerung erzeugte Wärme auch für die Dampferzeugung genutzt wird. Nachteilig an dieser Ausführung ist, dass die Verdampfungsleistung direkt von den Betriebsbedingungen der Feuerung abhängig ist. Ausserdem stellt der Verdampfer damit einen integralen Bestandteil der Feuerung dar und ist aufwendig wartbar bzw. bei Verschleiss umständlich ersetzbar.

Die EP-A-887018 bildet den Oberbegriff von Anspruch 1.

Eine zweite Variante besteht in einer separaten Verdampfungseinheit, die z. B. mit elektrischem Strom beheizt wird. Nachteilig an dieser Ausführung ist auf jeden Fall, eine zweite Heizung vorsehen zu müssen, und insbesondere im Falle einer elektrischen Heizung ist ein entsprechend leistungsfähiger Anschluss an das elektrische Stromnetz nötig.

Eine Aufgabe der vorliegenden Erfindung besteht daher darin, einen Backofen mit Verdampfungseinrichtung anzugeben, bei dem für die Verdampfung die Wärmeerzeugung der Feuerung des Backofens genutzt wird und der eine einfache Wartung der Verdampfungseinrichtung erlaubt und bei welchem die für die Verdampfung die Wärmeerzeugung der Feuerung des Backofens genutzt wird und dennoch die Verdampfungsleistung einstellbar ist.

Ein derartiger Backofen ist im Anspruch 1 angegeben. Die weiteren Ansprüche geben bevorzugte Ausführungsformen eines solchen Backofens an.

Die Verdampfungskammer kann dabei auch in direkten Kontakt mit dem Heisskanal gebracht werden, um einen maximalen Energieaustausch zu bewirken. Durch Verschieben in eine grössere Entfernung und die dabei auftretende geringere thermische Kopplung kann die Verdampfungsleistung an die aktuellen Betriebsbedingungen der Feuerung angepasst und eingestellt werden.

Die Erfindung wird an einem bevorzugten Ausführungsbeispiel unter Bezugnahme auf Figuren weiter erläutert. Es zeigen:

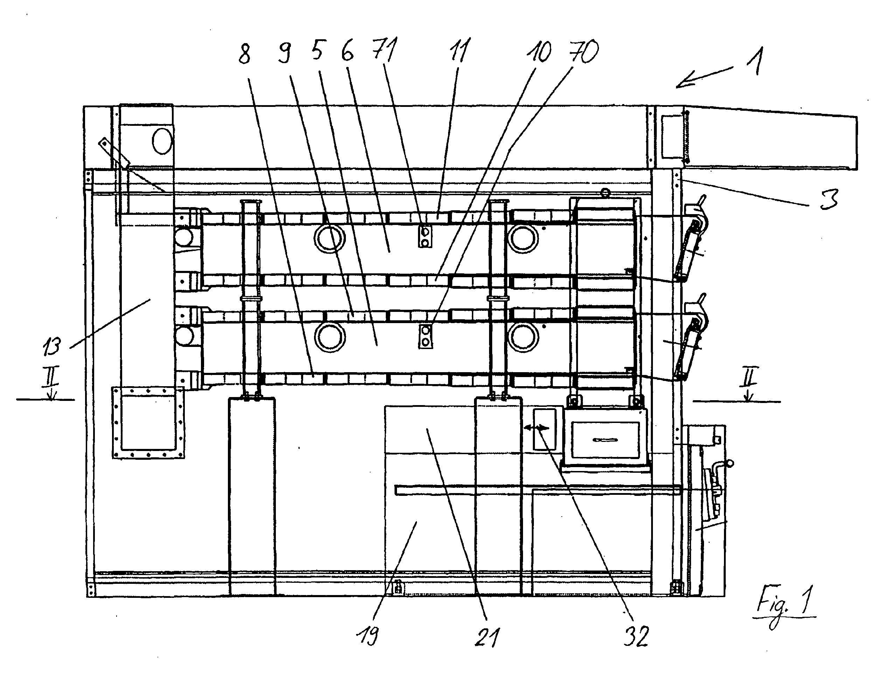

- Figur 1: eine Seitenansicht auf einen erfindungsgemässen Backofen;
- Figur 2: einen horizontalen Teilschnitt durch den Backofen gemäss II/II im Bereich der Feuerung;
- Figur 3: eine Ansicht mit geschnittenen Anschlüssen auf ein Verdampfungsgerät gemäss Linie III-III in Fig. 4;
- Figur 4: einen Längsschnitt durch ein Verdampfungsgerät gemäss IV-IV in Figur 3; und
- Figur 5: einen Schema der Temperaturverteilung in einem erfindungsgemässen Backofen.

Ein Backofen 1 weist in einem Gestell 3 zwei Backkammern 5 und 6 auf. Jede der beiden Backkammern ist oberhalb und unterhalb mit Heizkanälen 8, 9 bzw. 10, 11 versehen. Die Heizkanäle 8, 9, 10, 11 münden am hinteren Ende des Backofens, dem Herdrücken, in den Abluftschacht 13. Eingangsseitig sind sie über Steigkanäle 15 mit Seitenkanälen 17 verbunden. Zu den Seitenkanälen 17 werden die heissen Gase aus der Feuerung 19, aus der sie am hinteren Ende austreten, durch den Rückführkanal 21 geleitet. Die Feuerung steht damit als im wesentlichen unabhängiges Teil innerhalb des Gestells 3.

Die Hitze der Feuerung wird durch die Gase, die im beschriebenen Kanalsystem zirkuliert, an die Backkammern weitergegeben. Durch ein System von Klappen kann dabei der Heissgasstrom gelenkt werden, um z. B. nur die Oberhitzenkanäle 9, 11 oder die Unterhitzenkanäle 10, 8 oder eine andere Kombination der Heizungskanäle mit Wärme zu versorgen und damit die dem jeweiligen Backgut in den Backkammern 5, 6 entsprechenden Backbedingungen einzustellen.

Massnahmen, um eine möglichst hohe Ausnützung der Wärmeenergie der Heissgase zu bewirken, sind mäanderförmige Führungen in den Heizkanälen 8, 9, 10, 11.

In der bevorzugten Ausführungsform ist die Feuerung 19 für Holzfeuer ausgelegt. Insbesondere kommt diese Feuerung für Schaubacköfen in Frage, d. h für Backöfen, die dem Publikum sichtbar aufgestellt sind, so dass der Backvorgang beobachtet werden kann.

Die Verdampfungseinrichtung 30 ist seitlich am Seitenkanal 17 angeordnet. Wie der Pfeil 32 andeutet, ist sie seitlich bewegbar, z. B. auf einem Schienensystem, um die thermische Kopplung zwischen Seitenkanal 17 und der Verdampfungseinrichtung einstellen zu können. Sind z. B. grosse Dampfmengen nötig, so wird die Verdampfungseinrichtung nahe an den Seitenkanal 17 herangerückt, im Extremfall bis zum direkten Kontakt, um einen maximalen Wärmeübergang zu erzielen. Wird andererseits nur eine geringe Menge Dampf benötigt oder liefert die Feuerung mehr Wärme, so wird die Verdampfungseinrichtung vom Seitenkanal weggerückt und damit die übertragene Wärmemenge verringert. Insgesamt ist damit auf einfache Art eine genaue Einstellung der erzeugten Dampfmenge möglich, auch bei schlecht regelbaren Feuerungen wie einer Holzfeuerung.

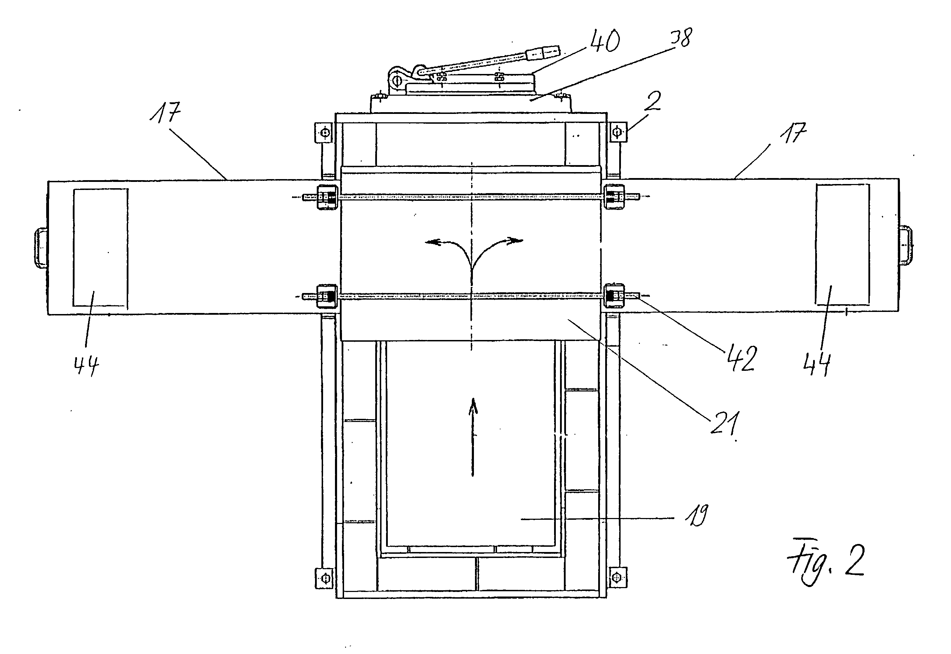

Figur 2 zeigt in einem horizontalen Schnitt die prinzipielle Konstruktion der Feuerung. Sie besteht im wesentlichen aus einem Kasten aus Stahl, in das eine isolierende und feuerfeste Fütterung 36 eingesetzt ist. An der Vorderseite sind die nötigen Türen 40 angebracht. Die Seitenkanäle 17 sind seitlich an den Rückführungskanal 21 angesetzt und mittels Gewindestangen 42 fixiert. An den Öffnungen 44 schliessen die Steigkanäle 15 an (nicht dargestellt).

Die heissen Gase strömen vom hinteren Ende der Feuerung 19 gemäss Pfeil 46 im Rückführkanal 21 (hier abgeschnitten) nach vorne und verteilen sich gemäss Doppelpfeil 48 auf die beiden Seitenkanäle 17.

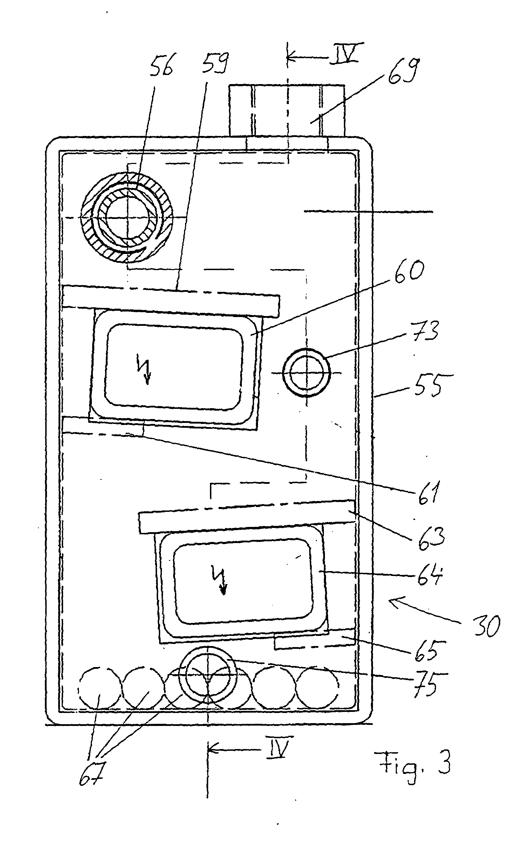

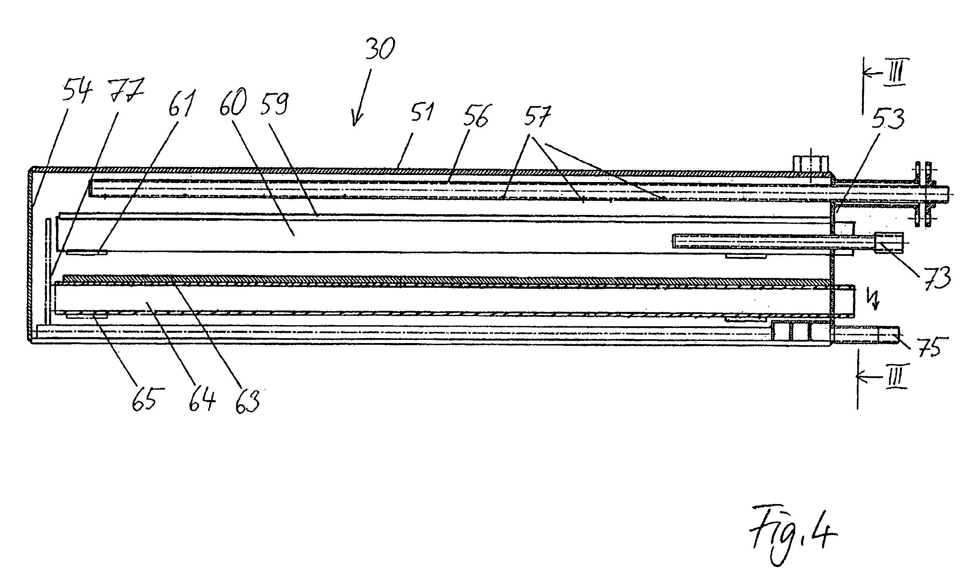

Die Figuren 3 und 4 zeigen die Verdampfungseinrichtung 30 im Detail. Ihr Gehäuse besteht aus einem Stahlrohr 51 von rechtlichem Querschnitt, das durch vorn und hinten angeschweisste Stahlplatten 53 bzw. 54 verschlossen ist. Die Wärmeaufnahme vom Heissgaskanal erfolgt über eine der beiden Seitenwände 55. Das zu verdampfende Wasser wird durch das Rohr 56 in den Verdampfer 30 eingeleitet. Das Rohr 56 weist über die Länge verteilt Austrittslöcher 57 für das Speisewasser aus.

Unterhalb des Rohres 56 verläuft eine erste Verdampfungsplatte 59, die leicht abgeschrägt ins Innere des Verdampfers 51 verläuft. Wie in Figur 3 zu sehen, ist das Rohr 56 nahe einer Seitenwand des Gehäuserohres 51 angeordnet, so dass das herausspritzende Wasser über die erste Verdampferplatte 59 in Richtung auf die gegenüberliegende Seitenwand 55 des Gehäuserohres 51 abfliesst. Unten an der ersten Verdampferplatte 59 liegt ein Heizungsgehäuserohr 60 von rechteckigem Querschnitt an, das unten von zwei Stahlkonsolen 61 gestützt wird. Das Heizungsgehäuserohr 60 dient dazu, eine Hilfs- oder Zusatzheizung aufzunehmen, z. B. einen elektrischen Heizkörper (nicht dargestellt). Unterhalb der beschriebenen Verdampferplatteneinheit 59, 60, 61 befindet sich eine zweite gleichartige Einheit aus Platte 63, Heizungsgehäuse 64 und Stahlkonsolen 65, die jedoch gegenläufig geneigt ist, um eine Art Labyrinth für das herablaufende Wasser zu bilden. Am Boden des Gehäuserohres 51 ist schliesslich eine Anordnung von Stahlstäben 67 angeordnet, auf die noch herablaufendes Verdampfungswasser auftropft. Insbesondere die Stahlstäbe 67, aber auch die Verdampferplatten 59, 63 wie auch in gewissem Umfang die mit diesen verbundenen übrigen Teile wirken auch als Wärmereservoir gegen kurzfristige Temperaturschwankungen.

Der entstehende Dampf entweicht durch die Öffnung 69. An den Stützen der Öffnung 69 ist ein bewegliches Metallrohr (nicht dargestellt) angeschlossen, das den Dampf zu den Backkammern 5, 6 führt. Im Beispiel verfügt der Backofen über zwei Backkammern und es sind zwei Verdampfer 30 vorgesehen, die jeweils an einem Arm des Seitenkanals 17 rechts und links der Feuerung 19 angeordnet sind. Der eine der beiden Verdampfer 30 versorgt die untere Backkammer 5 über den Anschluss 70 mit Dampf, der andere Verdampfer desgleichen über den Anschluss 71 die obere Backkammer 6.

Wie in Figur 4 zu sehen, ist in der vorderen Verschlussplatte 53 des Verdampfers 30 noch ein Rohr 73 eingesetzt, dass zur Aufnahme eines Temperaturfühlers dient. Nahe des Bodens befindet sich schliesslich noch ein Ablasstutzen 75, der dem vollständigen Entleeren des Verdampfers 30 von restlichem Wasser dient.

Zwischen der hinteren Verschlussplatte 54 und den rückwärtigen Öffnungen der Heizungsgehäuserohre 64 und 60 ist eine senkrechtstehende Stahlplatte 77 angeordnet, die als Anschlag für die elektrischen Heizkörper dient, die in die Heizungsgehäuserohre 60, 64 eingeschoben sind.

Als hauptsächliche Verbindungsart der aus Metall, insbesondere Stahl, bestehenden Bestandteile des Backofens dient Verschweissen.

Die beschriebene Konstruktion gestattet es, den Backofen in Einzelteilen zu transportieren und schnell aufzubauen.

Insbesondere stellt die Feuerung eine eigene, transportable Einheit dar. Für die übrigen Komponenten des Backofens, die Heissgaskanäle, Backkammern usw., sind Aufteilungsarten in transportable Komponenten und Verfahren zum Zusammenfügen vor Ort an sich bekannt.

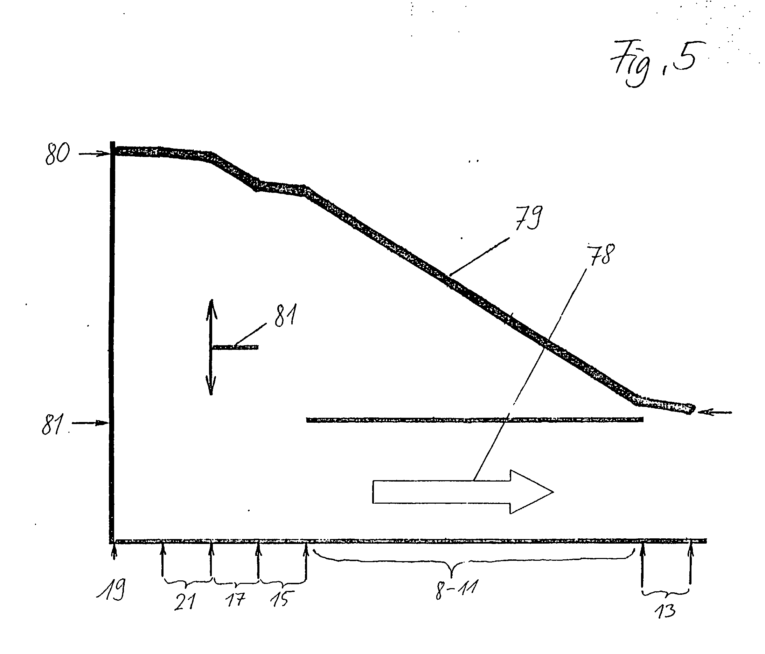

Figur 5 zeigt in Strömungsrichtung 78 die Temperatur 79 der Heissgase (bei Holzfeuerung: des Rauchgases) in Abhängigkeit vom Ort im Kanalsystem, beginnend bei der Feuerung 19, in der die Heissgase die Feuerungstemperatur 80 aufweisen. Die Temperatur nimmt innerhalb des Rückführkanals 21 etwas ab, deutlicher dann im Seitenkanal 17, u. a. wegen der zusätzlichen Abkühlung durch den dort befindlichen Verdampfer 30. Die Temperatur im Verdampfer 30 ist dabei je nach Bedarf variabel.

Im Steigkanal 15 tritt wieder eine geringere Temperaturabnahme auf. Beim Durchströmen der Heizkanäle 8-11 tritt die haupsächliche Wärmeübertragung und entsprechend eine starke Temperaturabnahme des Heissgases auf, wodurch die Backtemperatur 82 in den Backkammern 5, 6 eingestellt wird. Schliesslich entweicht das Heissgas unter weiterer Abkühlung durch den Abluftschacht 13.

Das Diagramm veranschaulicht die überraschend effektive Wärmeübertragung von dem Heissgasführungssystem auf die Verdampfer 30. Offensichtlich sind die Verdampfer am besten an Teilen des Heissgassystems angebracht, in denen die Heissgase noch eine möglichst hohe Temperatur aufweisen.

Aus der vorangehenden Beschreibung eines bevorzugten Ausführungsbeispieles sind dem Fachmann zahlreiche Abwandlungen der Erfindung zugänglich, ohne den Schutzbereich wie in den Ansprüchen definiert zu verlassen. Denkbar ist insbesondere:
- zusätzlich oder an Stelle einer Veränderung des Abstandes zwischen Verdampfer und Heissgaskanal auch eine Verschiebung parallel zueinander, wodurch die der Wärmeübertragung dienenden Flächenanteile und damit der Wärmeübergangswiderstand verändert wird;
- im Betrieb unveränderlicher thermischer Kopplungsgrad des Verdampfers mit dem jeweiligen Heissgaskanal, d. h. fester Abstand und feste Position relativ zueinander, insbesondere in Verbindung mit einer Regelung der elektrischen Heizkörper zum Einstellen der Verdampfungsleistung;
- Anordnung des/der Verdampfer an anderen Teilen des Heissgasführungssystems als den Seitenkanälen;
- anstelle von oder zusätzlich zu Verschweissen andere bekannte Verbindungsarten, z. B. Nieten, Schrauben, Kaltverschweissen, evtl. auch Kleben;
- Vorsehen einer anderen Anzahl Backkammern, insbesondere auch nur einer, und/oder einer anderen Anzahl Verdampfer, u. a. auch mehr als ein Verdampfer pro Backkammer oder Versorgung von mehr als einer Backkammer von einem einzigen Verdampfer;
- automatisches Steuern der Position des Verdampfers relativ zum jeweiligen Heisskanal durch eine Steuerung in Abhängigkeit von der benötigten Dampfmenge und dem Betriebszustand der Feuerung;
- Vorsehen einer anderen Anzahl Verdampfungseinrichtungen wie den Verdampferplatten und/oder den Stahlstäben, eventuell auch Verzicht auf die zusätzliche Verdampfungswirkung der am Boden liegenden Stahlstäbe;
- eine andere Speicher-/Verdampfungseinheit als die bevorzugte Anordnung von Stahlstäben am Boden der Verdampfer.

## Patentansprüche

1. Backofen (1) mit mindestens einer Backkammer (5, 6), die indirekt über von einer Heizeinrichtung (19) geliefertes und über mindestens eine Heissgasleitung (21, 17, 15, 8 bis 11) zugeführtes Heissgas beheizt wird, und mindestens einer Verdampfungseinrichtung (30) für Wasser, **dadurch gekennzeichnet, dass** die Verdampfungseinrichtung (30) bezüglich der Heissgasleitung (21, 17m 15, 8 bis 11) verschieblich angeordnet ist, so dass die für die Verdampfung benötigte Wärme über diese einstellbare thermische Koppelung auf die Verdampfungseinrichtung (30) übertragbar ist.

2. Backofen (1) gemäss Anspruch 1 **dadurch gekennzeichnet, dass** die thermische Koppelung zwischen Verdampfer (30) und Heissgasleitung (15, 17, 21) durch direkten Kontakt der Wände der Heissgasleitung und des Verdampfers oder über den Spalt zwischen den Wänden erfolgt.

3. Backofen (1) gemäss einem der Ansprüche 1 bis 2 **dadurch gekennzeichnet, dass** durch den Abstand der Wände des Verdampfers (30) und der Heissgasleitung (15,17,21) und/oder die einander gegenüberliegenden veränderbaren wirksamen Flächenanteile dieser Wände der thermische Koppelungsgrad einstellbar ist.

4. Backofen (1) gemäss einem der Ansprüche 1 bis 3 **dadurch gekennzeichnet, dass** der Verdampfer (30) mit einer Zusatzheizung, insbesondere mindestens einem elektrischen Heizkörper, ausgestattet ist.

5. Backofen (1) gemäss einem der Ansprüche 1 bis 4 **dadurch gekennzeichnet, dass** sich im Innern des Verdampfers (30) mindestens ein flächiges Verdampfungselement (59, 63), bevorzugt eine Mehrzahl derartiger Verdampfungselemente, befindet, die derart angeordnet sind, dass entweder das von einer Speisewasserzufuhreinrichtung (56) zugeführte Wasser oder bei einer Mehrzahl von Verdampfungselementen das vom vorangehenden Verdampfungselement ablaufende, unverdampfte Wasser auf das Verdampfungselement fällt und über einen wesentlichen Teil seiner Oberfläche hinwegfliesst, um es dabei zu verdampfen.

6. Backofen (1) gemäss Anspruch 5, **dadurch gekennzeichnet, dass** mindestens zwei flächige Verdampfungselemente (59, 63) vorhanden sind, die im wesentlichen übereinander und spiegelbildlich schräg angeordnet sind, so dass auf das oberste Verdampfungselement aufgebrachtes Speisewasser die Anordnung von Verdampferelementen labyrinthartig durchläuft.

7. Backofen (1) gemäss einem der Ansprüche 5 bis 6, **dadurch gekennzeichnet, dass** mindestens eines der flächigen Verdampfungselemente, mit einer Zusatzheizeinrichtung, insbesondere einem elektrischen Heizkörper, versehen ist bzw. sind.

8. Backofen (1) gemäss einem der Ansprüche 1 bis 7, **dadurch gekennzeichnet, dass** die Heizeinrichtung (19) für das Verbrennen von Holz, Fasermaterial biologischen Ursprungs und/oder daraus herstellbarem Heizmaterial ausgelegt ist.

9. Backofen (1) gemäss einem der Ansprüche 1 bis 8, **dadurch gekennzeichnet, dass** die Heizeinrichtung (19) im wesentlichen eine kastenförmige Einfassung, bevorzugt aus Metall und insbesondere bevorzugt aus Stahl, umfasst, in der eine feuerfeste und isolierende Auskleidung angebracht ist, so dass die Heizeinrichtung (19) transportabel ist.

## Claims

1. A baking oven (1) with at least one baking chamber (5, 6), heated by an indirect heating system (19) delivering hot gas via at least one hot gas supply duct (21, 17, 15, 8 to 11) and at least one evaporation system (30) for water, **characterized in that** the evaporation system (30) is slidably disposed with regard to the hot gas supply duct (21, 17, 15, 8 to 11) so that the heat necessary for evaporation can be transferred to the evaporation system (30) by means of this adjustable thermal coupling.

2. A baking oven (1) according to claim 1, **characterized in that** the thermal coupling is effected between the evaporator (30) and the hot gas supply duct (15, 17, 21) by direct contact of the walls of the hot gas supply duct and the evaporator or by means of the gap between the walls.

3. A baking oven (1) according to either claim 1 to 2, **characterized in that** the thermal coupling degree can be adjusted by means of the distance of the evaporator (30) and the hot gas supply line (15, 17, 21) and/or the opposed variable effective surface portions of these walls.

4. A baking oven (1) according to one of claims 1 to 3, **characterized in that** the evaporator (30) is equipped with a supplementary heating element, particularly at least one electric radiator.

5. A baking oven (1) according to one of the claims 1 to 4, **characterized in that** at least one plane evaporation element (59, 63), preferably several such evaporation elements, is located inside the evaporator (30), disposed in such a way that either the water supplied by a feed-water supply device (56) or in case of several evaporation elements the water draining off the preceding evaporation element which has not been evaporated drops on the evaporation element and flows off via an essential part of its surface in order to evaporate during this process.

6. A baking oven (1) according to claim 5, **characterized in that** it is equipped with at least two plane evaporation elements (59, 63) basically disposed on top of each other and in mirror-inverted and inclined position so that feed-water applied to the upper evaporation element passes through the arrangement of evaporation elements in a labyrinthine way.

7. A baking oven (1) according to one of claims 5 to 6, **characterized in that** at least one of the plane evaporation elements is or are equipped with an additional heating system, particularly with an electric radiator.

8. A baking oven (1) according to one of the claims 1 to 7, **characterized in that** the heating system (19) is designed for burning wood, fiber material from organic origin and/or fuel produced on the basis of these materials.

9. A baking oven (1) according to one of the claims 1 to 8, **characterized in that** the heating system (19) basically comprises a box-shaped enclosure, preferably made of metal and more preferably made of steel, equipped with a fireproof and insulating lining so that the heating system (19) is transportable.

## Revendications

1. Four (1) avec au moins une chambre de cuisson (5, 6) qui est chauffée indirectement par du gaz chaud introduit par une installation de chauffage (19) et une conduite de gaz chaud (21, 17, 15, 8 à 11) et avec au moins une installation d'évaporation (30) pour l'eau, **caractérisée par le fait que** l'installation d'évaporation (30) est fixée de manière amovible par rapport à la conduite de gaz chaud (21, 17, 15, 8 à 11), afin que la chaleur utilisée pour l'évaporation soit transférable vers l'installation d'évaporation (30) par le couplage thermique réglable.

2. Four (1), conformément à la revendication 1, est **caractérisé par le fait que** le couplage thermique entre l'évaporateur (30) et la conduite de gaz chaud (15, 17, 21) s'effectue par le contact direct des parois de la conduite de gaz chaud et de l'évaporateur ou par l'écart entre les parois.

3. Four (1), conformément à l'une des revendications 1 à 2, est **caractérisé par le fait que** par l'écart entre les parois de l'évaporateur (30) et la conduite de gaz chaud (15, 17, 21) et/ou des parties efficaces réglables des parois qui sont opposées le degré de couplage thermique est réglable.

4. Four (1), conformément à l'une des revendications 1 à 3, est **caractérisé par le fait que** l'évaporateur (30) est équipé d'un chauffage complémentaire, en particulier d'au moins un corps de chauffe électrique.

5. Four (1), conformément à l'une des revendications 1 à 4, est **caractérisé par le fait qu'**à l'intérieur de l'évaporateur (30) se trouve au moins un élément d'évaporation de grande étendue (59, 63), préfère une majorité d'éléments de ce type, qui soient disposés de telle manière à ce que soit l'eau amenée par une installation de conduite d'eau potable (56) ou lors d'une majorité d'éléments d'évaporation, l'eau non condensée qui coule d'un élément d'évaporation sur le suivant et qui se diffuse sur une partie importante de la superficie afin de la condenser.

6. Four (1), conformément à la revendication 5, est **caractérisé par le fait qu'**au moins deux éléments d'évaporation de grande étendue (59, 63) soient existant, qui sont disposés en général les uns sur les autres et en formant un reflet oblique, afin que l'eau potable qui se trouve sur l'élément d'évaporation supérieur traverse la disposition des éléments d'évaporation comme dans un labyrinthe.

7. Four (1), conformément à l'une des revendications 5 à 6, est **caractérisé par le fait qu'**au moins un des éléments de grande étendue d'évaporation soit assorti d'une installation de chauffage complémentaire, en particulier avec un corps de chauffe électrique.

8. Four (1), conformément à l'une des revendications 1 à 7, est **caractérisé par le fait que** l'installation de chauffage (19) est carrelée pour l'incinération de bois, de matériel en fibre d'origine biologique et/ou de matériel de chauffe produit du précédent.

9. Four (1), conformément à l'une des revendications 1 à 8, est **caractérisé par le fait que** l'installation de chauffage (19) a une bordure en forme de caisson, de préférence en métal et notamment de préférence en acier, dans laquelle un revêtement réfractaire et isolant est installé, pour que l'installation de chauffage (19) soit transportable.
